# EUROPEAN PATENT APPLICATION

(11) **EP 4 814 912 A1**
(43) Date of publication of application: **30.09.2026**
(21) Application number: 24913761.3
(22) Date of filing: 30.12.2024
(51) Int. Cl.: G07D 11/22, G01B 11/06, G07F 19/00

(54) **AUTOMATED TELLER MACHINE AND METHOD FOR CONTROLLING AUTOMATED TELLER MACHINE**

(30) Priority: 29.12.2023 KR 20230196754
(71) Applicant: HYOSUNG TNS INC., Gangnam-gu, Seoul 06349 (KR)
(72) Inventor: PARK, Yun Su, Seoul 06349 (KR); KIM, Jun Young, Seoul 06349 (KR); BYUN, Seong Wook, Seoul 06349 (KR); BAEK, Yoon Kil, Seoul 06349 (KR)
(74) Representative: BCKIP Part mbB
(86) International application number: PCT/KR2024/021495
(87) International publication number: WO 2025/143957

(57) **Abstract**

An automated teller machine includes a body, a thickness-sensing roller unit, a medium thickness sensing unit, and a controller. The thickness-sensing roller unit includes a thickness-sensing reference roller fixed to the body and a thickness-sensing auxiliary roller movable vertically. The medium thickness sensing unit includes a roller displacement sensing unit configured to sense vertical displacement of the auxiliary roller. The roller unit operates in a medium passing state or a medium non-passing state, in which the auxiliary roller contacts the reference roller. The controller calculates the thickness of a medium based on the sensed displacement by subtracting a medium non-passing phase, representing the displacement in the medium non-passing state, from a medium passing phase, representing the displacement in the medium passing state.

## Description

### TECHNICAL FIELD

The present disclosure relates to an automated teller machine and a method for controlling the automated teller machine.

### BACKGROUND ART

Generally, an automated teller machine (ATM; Automated Teller Machine) is a device installed in places other than counters at financial institutions, such as banks, and operable to allow users to conveniently use various financial services regardless of time and place. An automated teller machine may provide various financial services such as cash deposit and withdrawal, account transfer, balance inquiry, and passbook update.

Such an automated teller machine includes a medium thickness sensing unit sensing a thickness of media conveyed in the automated teller machine. The medium thickness sensing unit includes a thickness-sensing reference roller fixed to a body of the automated teller machine and a thickness-sensing auxiliary roller disposed above the thickness-sensing reference roller so as to be movable at least in an up and down direction. The medium thickness sensing unit senses the thickness of the media by sensing a displacement of the thickness-sensing auxiliary roller in the up and down direction when the media pass between the thickness-sensing reference roller and the thickness-sensing auxiliary roller.

Meanwhile, among media deposited into the automated teller machine by a user, there is a medium of which at least a portion is torn and torn portions are attached to each other by tape or the like. In other words, there is a medium attached by tape or the like. As such, in some countries, a medium attached by tape or the like is stored in the automated teller machine for exchange with a normal, untorn medium to prevent circulation in the market, and in other countries, the medium attached by the tape or the like is not stored in the automated teller machine and is returned to the user.

When the concentricity of the thickness-sensing reference roller of the medium thickness sensing unit is relatively good, the influence of the concentricity of the thickness-sensing reference roller is small, thereby allowing the thickness of the media to be sensed relatively accurately. Therefore, when the concentricity of the thickness-sensing reference roller of the medium thickness sensing unit is relatively good, the tape or the like attached to the media may also be sensed relatively precisely, thereby easily sensing the medium attached by the tape or the like.

However, when the concentricity of the thickness-sensing reference roller of the medium thickness sensing unit is not good, the concentricity of the thickness-sensing reference roller affects the sensing of the thickness of the media, failing to sense the thickness of the media relatively accurately. Therefore, when the concentricity of the thickness-sensing reference roller of the medium thickness sensing unit is not relatively good, the tape or the like attached to the media may fail to be sensed relatively precisely, failing to easily sense the medium attached by the tape or the like. In other words, when the concentricity of the thickness-sensing reference roller is not relatively good, a degree of eccentricity of the thickness-sensing reference roller may have a size similar to or larger than a thickness of tape or the like having a relatively smaller thickness than the thickness of the media. Therefore, when the concentricity of the thickness-sensing reference roller of the medium thickness sensing unit is not good, there may be an error determining the medium attached by the tape or the like as a normal medium.

Conventionally, the concentricity of the thickness-sensing reference roller has been relatively well maintained so that the concentricity of the thickness-sensing reference roller of the medium thickness sensing unit does not affect the sensing of the thickness of the media. For example, the concentricity of the thickness-sensing reference roller was maintained at 1/100, and for this purpose, the thickness-sensing reference roller was precision-processed with an accuracy of 1/1000 to 5/1000. Therefore, a conventional thickness-sensing reference roller had a disadvantage of being relatively expensive.

### SUMMARY OF THE INVENTION

### TECHNICAL PROBLEMS

Embodiments of the present disclosure provide an automated teller machine and a method for controlling the automated teller machine capable of sensing a thickness of media relatively precisely even when a concentricity of a thickness-sensing reference roller is not good, by correcting a sensed thickness of the media in consideration of the concentricity of the thickness-sensing reference roller used to sense the thickness of the media when sensing the thickness of the media such as banknotes.

### TECHNICAL SOLUTION

An automated teller machine according to an aspect of the present disclosure includes: a body; a thickness-sensing roller unit including a thickness-sensing reference roller fixed to the body and a thickness-sensing auxiliary roller disposed above the thickness-sensing reference roller so as to be movable in an up and down direction; a medium thickness sensing unit including a roller displacement sensing unit sensing an up and down displacement of the thickness-sensing auxiliary roller with respect to the thickness-sensing reference roller; and a controller configured to calculate a thickness of a medium based on the up and down displacement sensed by the roller displacement sensing unit, wherein the thickness-sensing roller unit is placed in a medium non-passing state in which the medium does not pass between the thickness-sensing reference roller and the thickness-sensing auxiliary roller, or in a medium passing state in which the medium passes between the thickness-sensing reference roller and the thickness-sensing auxiliary roller, and in the medium non-passing state, the thickness-sensing auxiliary roller and the thickness-sensing reference roller are arranged to contact each other, and wherein the controller calculates the thickness of the medium by subtracting a medium non-passing phase, which is the up and down displacement in the medium non-passing state, from a medium passing phase, which is the up and down displacement in the medium passing state.

Further, the medium thickness sensing unit may further include: a medium detection sensor spaced apart from the thickness-sensing roller unit by a thickness-sensing separation distance in a direction opposite to a convey direction of the medium and sensing passage of the medium.

Further, the automated teller machine may further include: an encoder disposed on the thickness-sensing reference roller to sense a rotational position of the thickness-sensing reference roller, the encoder may sense a plurality of rotational positions of the thickness-sensing reference roller while the thickness-sensing reference roller rotates one revolution, and the roller displacement sensing unit may sense the medium non-passing phase at the plurality of rotational positions.

Further, the thickness-sensing separation distance may be greater than a circumference length of the thickness-sensing reference roller, and the roller displacement sensing unit may sense the medium non-passing phase while the medium is detected by the medium detection sensor and the medium is conveyed to the thickness-sensing roller unit.

Further, the controller may determine one or more reference rotational positions from among the plurality of rotational positions based on a point in time when the medium is detected by the medium detection sensor.

Further, the controller may calculates the thickness of the medium by subtracting the medium non-passing phase at the one or more reference rotational positions from the medium passing phase at the one or more reference rotational positions.

Further, the roller displacement sensing unit may include: a lever member connected to the thickness-sensing auxiliary roller so as to move together with the thickness-sensing auxiliary roller; a magnet disposed on one of the lever member and the body; and a Hall sensor disposed on the other of the lever member and the body so as to correspond to the magnet and sensing a magnetic force of the magnet.

Further, before each financial transaction, the thickness-sensing reference roller may be rotated, the encoder may sense the plurality of rotational positions of the thickness-sensing reference roller, the roller displacement sensing unit may sense the medium non-passing phase at the plurality of rotational positions and a concentricity of the thickness-sensing reference roller may be measured.

A method for controlling an automated teller machine according to another aspect of the present disclosure includes: sensing a medium non-passing phase, which is an up and down displacement of a thickness-sensing auxiliary roller with respect to a thickness-sensing reference roller, in a medium non-passing state in which a medium does not pass between the thickness-sensing reference roller and the thickness-sensing auxiliary roller; sensing a medium passing phase, which is the up and down displacement of the thickness-sensing auxiliary roller with respect to the thickness-sensing reference roller, in a medium passing state in which the medium passes between the thickness-sensing reference roller and the thickness-sensing auxiliary roller; and calculating a thickness of the medium by subtracting the medium non-passing phase from the medium passing phase, wherein the thickness-sensing reference roller is fixed to a body and the thickness-sensing auxiliary roller is disposed above the thickness-sensing reference roller so as to be movable at least in an up and down direction, and wherein in the medium non-passing state, the thickness-sensing auxiliary roller and the thickness-sensing reference roller contact each other. Further, the method may further include: sensing passage of the medium by a medium detection sensor, and the medium detection sensor may be spaced apart from a thickness-sensing roller unit including the thickness-sensing reference roller and the thickness-sensing auxiliary roller by a thickness-sensing separation distance in a direction opposite to a convey direction of the medium.

Further, the sensing the medium non-passing phase may include: sensing a plurality of rotational positions of the thickness-sensing reference roller by an encoder disposed on the thickness-sensing reference roller while the thickness-sensing reference roller rotates one revolution, and sensing the medium non-passing phase at the plurality of rotational positions.

Further, the thickness-sensing separation distance may be greater than a circumference length of the thickness-sensing reference roller, and the sensing the medium non-passing phase may be performed while the passage of the medium is sensed in the sensing passage of the medium and the medium is conveyed to the thickness-sensing roller unit.

Further, the sensing the medium non-passing phase or the sensing the medium passing phase may include determining one or more reference rotational positions from among the plurality of rotational positions based on a point in time when the medium is detected, and the calculating the thickness of the medium may include calculating the thickness of the medium by subtracting the medium non-passing phase at the one or more reference rotational positions from the medium passing phase at the one or more reference rotational positions.

### EFFECT OF INVENTION

According to the embodiments of the present disclosure, there is an effect of correcting the sensed thickness of the media in consideration of the concentricity of the thickness-sensing reference roller used to sense the thickness of the media when sensing the thickness of the media such as the banknotes.

Furthermore, according to the embodiments of the present disclosure, even if the concentricity of the thickness-sensing reference roller is not good, there is an effect of sensing the thickness of the media relatively precisely.

Furthermore, according to the embodiments of the present disclosure, even if the concentricity of the thickness-sensing reference roller is not good, there is an effect of sensing the medium attached by tape or the like.

### BRIEF DESCRIPTION OF THE DRAWINGS

FIG. 1 is a view showing an automated teller machine according to an embodiment of the present disclosure.
FIG. 2 is a view showing a medium thickness sensing unit of the automated teller machine of FIG. 1.
FIG. 3 is a view showing an encoder of the medium thickness sensing unit of the automated teller machine of FIG. 1.
FIG. 4 is a view showing a method for controlling the automated teller machine according to the embodiment of the present disclosure.
FIG. 5 is a view showing a medium sensing step of the method for controlling the automated teller machine of FIG. 4.
FIG. 6 is a view showing a medium non-passing phase sensing step of the method for controlling the automated teller machine of FIG. 4.
FIG. 7 is a view showing a medium non-passing phase sensed in the medium non-passing phase sensing step of FIG. 6.
FIG. 8 is a view showing a medium passing phase sensing step of the method for controlling the automated teller machine of FIG. 4.
FIG. 9 is a view showing the medium non-passing phase sensed in the medium non-passing phase sensing step of FIG. 6 and a medium passing phase sensed in the medium passing phase sensing step of FIG. 8 together.
FIG. 10 is a view showing a medium thickness calculated in a medium thickness calculating step of the method for controlling the automated teller machine of FIG. 4.

### BEST MODE FOR IMPLEMENTIGN THE INVENTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'conveyed' to, or 'contacted' with another element, it should be understood that the element may be directly connected to, or flowed to another element, but that other elements may exist in the middle.

The terms used in the present disclosure are only used for describing specific embodiments, and are not intended to limit the present disclosure. Singular expressions include plural expressions unless the context clearly indicates otherwise.

In addition, the terms such as "upper side", "up and down direction", "upper portion", "lower portion" or the like used herein are defined with reference to the orientations illustrated in the drawings. Accordingly, these terms may vary depending on the orientation of the corresponding element. For the same reason, certain components in the accompanying drawings may be exaggerated, omitted, or schematically illustrated, and the dimensions of the respective components do not necessarily represent their actual dimensions.

Further, terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

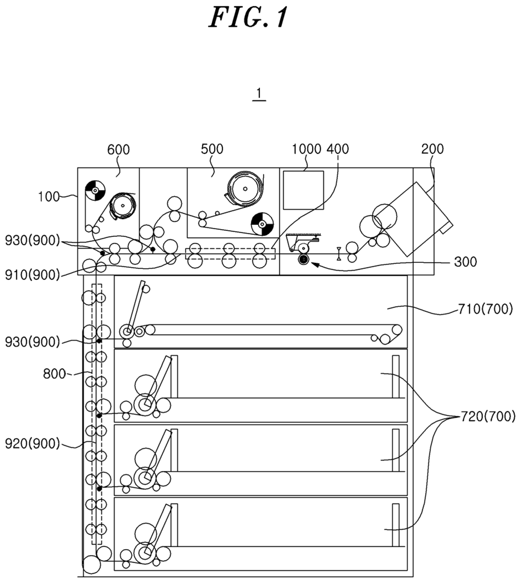

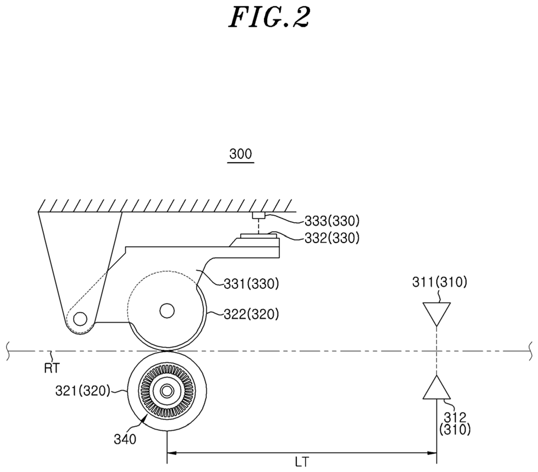

Hereinafter, a specific configuration of an automated teller machine 1 according to an embodiment of the present disclosure will be described with reference to FIGS. 1 and 2. The automated teller machine 1 may discriminate media 2 such as banknotes deposited by a user while conveying them, classify and store them according to a discrimination result, or dispense the stored media 2 to the user. The automated teller machine 1 may include a body 100, a customer reception unit 200, a medium thickness sensing unit 300, a deposited medium discrimination unit 400, a temporary holding unit 500, a reject unit 600, a storage unit 700, a dispensed medium discrimination unit 800, a conveyance path 900, and a controller 1000.

Referring to FIG. 1, inside the body 100, the customer reception unit 200, the medium thickness sensing unit 300, the deposited medium discrimination unit 400, the temporary holding unit 500, the reject unit 600, the storage unit 700, the dispensed medium discrimination unit 800, the conveyance path 900, and the controller 1000 may be disposed and supported. In the body 100, a space in which the customer reception unit 200, the medium thickness sensing unit 300, the deposited medium discrimination unit 400, the temporary holding unit 500, the reject unit 600, the storage unit 700, the dispensed medium discrimination unit 800, the conveyance path 900, and the controller 1000 may be disposed may be formed. A medium inlet/outlet (not shown) may be formed in the body 100. The medium inlet/outlet may communicate with the customer reception unit 200. A user may insert the media 2 into the customer reception unit 200 through the medium inlet/outlet. Furthermore, the user may receive the media 2 conveyed to the customer reception unit 200 through the medium inlet/outlet.

Referring to FIG. 1, in the customer reception unit 200, the media 2 such as the banknotes may be inserted and stacked by the user through the medium inlet/outlet and then conveyed to the deposited medium discrimination unit 400, or the media 2 conveyed from the deposited medium discrimination unit 400 may be stacked and then discharged through the medium inlet/outlet for the user to receive. The media 2 inserted and stacked in the customer reception unit 200 through the medium inlet/outlet may be separated sheet by sheet and conveyed sheet by sheet to the deposited medium discrimination unit 400. Furthermore, the media 2 may be conveyed sheet by sheet from the deposited medium discrimination unit 400, stacked in the customer reception unit 200, and discharged through the medium inlet/outlet.

Referring to FIG. 2, the medium thickness sensing unit 300 may sense a thickness of the media 2. The medium thickness sensing unit 300 may be disposed on the conveyance path 900 to sense the thickness of the media 2 conveyed in the conveyance path 900. For example, the medium thickness sensing unit 300 may be disposed between the customer reception unit 200 and the deposited medium discrimination unit 400 on an upper conveyance path 910 to be described later included in the conveyance path 900, thereby sensing the thickness of the media 2 conveyed from the customer reception unit 200 to the deposited medium discrimination unit 400. The medium thickness sensing unit 300 may include a medium detection sensor 310, a thickness-sensing roller unit 320, a roller displacement sensing unit 330, and an encoder 340.

The medium detection sensor 310 may sense passage of the media 2. The medium detection sensor 310 may be disposed to be spaced apart from the thickness-sensing roller unit 320 by a thickness-sensing separation distance LT in a direction opposite to a convey direction of the media 2. In other words, the thickness-sensing roller unit 320 may be disposed to be spaced apart from the medium detection sensor 310 by the thickness-sensing separation distance LT in the convey direction of the media 2. The thickness-sensing separation distance LT may be greater than a circumference length of a thickness-sensing reference roller 321, to be described later, included in the thickness-sensing roller unit 320. Furthermore, the media 2 may reach the thickness-sensing roller unit 320 after the medium detection sensor 310 senses the passage of the media 2 and the media 2 are conveyed by a distance longer than the circumference length of the thickness-sensing reference roller 321. The medium detection sensor 310 may be connected to the controller 1000 and transmit the passage of the media 2 to the controller 1000. The medium detection sensor 310 may include a medium detection light-emitting unit 311 and a medium detection light-receiving unit 312.

The medium detection light-emitting unit 311 may be arranged to irradiate light to the medium detection light-receiving unit 312. The medium detection light-emitting unit 311 may be disposed to face the medium detection light-receiving unit 312 with a medium convey route RT through which the media 2 are conveyed via the conveyance path 900 interposed therebetween. For example, the medium detection light-emitting unit 311 may be disposed above the medium convey route RT to be spaced apart from the medium convey route RT by a predetermined distance to irradiate the light to the medium detection light-receiving unit 312.

The medium detection light-receiving unit 312 may be operable to detect the light irradiated from the medium detection light-emitting unit 311. The medium detection light-receiving unit 312 may be disposed to face the medium detection light-emitting unit 311 with the medium convey route RT interposed therebetween. For example, the medium detection light-receiving unit 312 may be disposed below the medium convey route RT to be spaced apart from the medium convey route RT by a predetermined distance so as to face the medium detection light-emitting unit 311 disposed above the medium convey route RT. When the media 2 are conveyed in the medium convey route RT and pass between the medium detection light-emitting unit 311 and the medium detection light-receiving unit 312, the media 2 may block the light irradiated from the medium detection light-emitting unit 311. When the media 2 block the light irradiated from the medium detection light-emitting unit 311, the medium detection light-receiving unit 312 may fail to detect the light irradiated from the medium detection light-emitting unit 311. Furthermore, as the medium detection light-receiving unit 312 fails to detect the light irradiated from the medium detection light-emitting unit 311 due to the media 2, the passage of the media 2 may be sensed.

The thickness-sensing roller unit 320 may be operable to sense the thickness of the media 2. The thickness-sensing roller unit 320 may be placed in a medium non-passing state in which the media 2 do not pass between the thickness-sensing reference roller 321 and a thickness-sensing auxiliary roller 322 to be described later, or in a medium passing state in which the media 2 pass between the thickness-sensing reference roller 321 and the thickness-sensing auxiliary roller 322. Furthermore, the thickness-sensing roller unit 320 may be arranged such that the thickness-sensing auxiliary roller 322 and the thickness-sensing reference roller 321 are in contact with each other in the medium non-passing state. The thickness-sensing roller unit 320 may be disposed on the conveyance path 900. For example, the thickness-sensing roller unit 320 may be disposed between the customer reception unit 200 and the deposited medium discrimination unit 400 on the upper conveyance path 910 of the conveyance path 900. The thickness-sensing roller unit 320 may be disposed to be spaced apart from the medium detection sensor 310 by the thickness-sensing separation distance LT in the convey direction of the media 2. The thickness-sensing roller unit 320 may include the thickness-sensing reference roller 321, the thickness-sensing auxiliary roller 322, and an elastic member (not shown).

The thickness-sensing reference roller 321 may be fixed to the body 100. In other words, a rotation shaft of the thickness-sensing reference roller 321 may be disposed on the body 100 so as to rotate without moving. The thickness-sensing reference roller 321 may convey the media 2 in the convey direction. The rotation shaft of the thickness-sensing reference roller 321 is connected to a roller driving unit (not shown) including a motor (not shown) providing rotational force, and rotates in the convey direction of the media 2, thereby conveying the media 2 in the convey direction. The roller driving unit may be connected to the controller 1000 and driven or stopped according to a command of the controller 1000.

The thickness-sensing auxiliary roller 322 may be disposed above the thickness-sensing reference roller 321 so as to be movable at least in the up and down direction. In other words, a rotation shaft of the thickness-sensing auxiliary roller 322 may be disposed on the body 100 so as to not only rotate but also move at least in the up and down direction. The thickness-sensing auxiliary roller 322 may be in contact with the thickness-sensing reference roller 321 in the medium non-passing state. For example, in the medium non-passing state, at least a portion of a lower portion of the thickness-sensing auxiliary roller 322 may be in contact with at least a portion of an upper portion of the thickness-sensing reference roller 321. The thickness-sensing auxiliary roller 322 may be in contact with the thickness-sensing reference roller 321 by an elastic force of the elastic member in the medium non-passing state. The thickness-sensing auxiliary roller 322 may move at least in the up and down direction according to the concentricity of the thickness-sensing reference roller 321 in the medium non-passing state. In other words, the thickness-sensing auxiliary roller 322 may move at least in the up and down direction according to the degree of eccentricity of the thickness-sensing reference roller 321 in the medium non-passing state. Furthermore, the thickness-sensing auxiliary roller 322 may be moved at least in the up and down direction by the media 2 passing between the thickness-sensing reference roller 321 and the thickness-sensing auxiliary roller 322 in the medium passing state.

The elastic member may provide the elastic force to the thickness-sensing auxiliary roller 322 so that the thickness-sensing auxiliary roller 322 is in contact with the thickness-sensing reference roller 321 in the medium non-passing state. The elastic member may be disposed on the body 100 to provide the elastic force to the thickness-sensing auxiliary roller 322 in a direction toward the thickness-sensing reference roller 321.

The roller displacement sensing unit 330 may sense an up and down displacement of the thickness-sensing auxiliary roller 322 with respect to the thickness-sensing reference roller 321. The roller displacement sensing unit 330 may be connected to the controller 1000 and transmit the sensed up and down displacement of the thickness-sensing auxiliary roller 322 to the controller 1000. The roller displacement sensing unit 330 may sense a medium non-passing phase, which is the up and down displacement of the thickness-sensing auxiliary roller 322 with respect to the thickness-sensing reference roller 321 in the medium non-passing state of the thickness-sensing roller unit 320. The medium non-passing phase may indicate the concentricity of the thickness-sensing reference roller 321. In other words, the medium non-passing phase may indicate the degree of eccentricity of the thickness-sensing reference roller 321. Furthermore, the roller displacement sensing unit 330 may sense a medium passing phase, which is the up and down displacement of the thickness-sensing auxiliary roller 322 with respect to the thickness-sensing reference roller 321 in the medium passing state of the thickness-sensing roller unit 320. The medium passing phase may indicate a sum of the concentricity of the thickness-sensing reference roller 321 and the thickness of the media 2. In other words, the medium passing phase may indicate, for example, a sum of the degree of eccentricity of the thickness-sensing reference roller 321 and the thickness of the media 2.

The roller displacement sensing unit 330 may sense the medium non-passing phase while the media 2 are detected by the medium detection sensor 310 and the media 2 are conveyed to the thickness-sensing roller unit 320. In other words, the roller displacement sensing unit 330 may sense the medium non-passing phase during at least a portion of the medium non-passing state of the thickness-sensing roller unit 320. Furthermore, the roller displacement sensing unit 330 may sense the medium non-passing phase at a plurality of rotational positions of the thickness-sensing reference roller 321 sensed by the encoder 340, to be described later. Furthermore, the roller displacement sensing unit 330 may sense the medium passing phase at the plurality of rotational positions of the thickness-sensing reference roller 321. The roller displacement sensing unit 330 may include a lever member 331, a magnet 332, and a Hall sensor 333.

The lever member 331 may be connected to the thickness-sensing auxiliary roller 322 so as to move together with the thickness-sensing auxiliary roller 322. For example, one side of the lever member 331 may be connected to the thickness-sensing auxiliary roller 322, and the other side thereof may be pivotably connected to the body 100.

The magnet 332 may be disposed on one of the lever member 331 and the body 100. For example, the magnet 332 may be disposed on an upper portion of the lever member 331.

The Hall sensor 333 may be disposed on the body 100 above the magnet 332 to be spaced apart from the magnet 332 by a predetermined distance in the up and down direction. The Hall sensor 333 may sense a change in the magnetic force transmitted from the magnet 332 as the lever member 331 moves together with the thickness-sensing auxiliary roller 322 and a position of the magnet 332 is changed. The up and down displacement of the thickness-sensing auxiliary roller 322 may be sensed by the change in the magnetic force transmitted from the magnet 332 sensed by the Hall sensor 333. In other words, when the magnetic force transmitted from the magnet 332 changes as the position of the magnet 332 is changed by moving the lever member 331 together with the thickness-sensing auxiliary roller 322, a voltage generated from the Hall sensor 333 may change. Furthermore, the up and down displacement of the thickness-sensing auxiliary roller 322 may be sensed by the change in the voltage generated from the Hall sensor 333. The Hall sensor 333 may be connected to the controller 1000 and transmit the sensed up and down displacement of the thickness-sensing auxiliary roller 322 to the controller 1000.

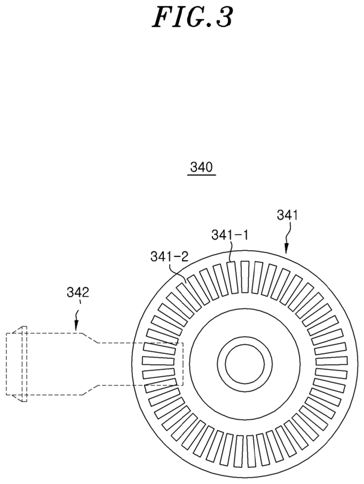

Referring to FIG. 3, the encoder 340 may be disposed on the thickness-sensing reference roller 321 to sense a rotational position of the thickness-sensing reference roller 321. The encoder 340 may sense a plurality of rotational positions of the thickness-sensing reference roller 321 while the thickness-sensing reference roller 321 rotates one revolution. For example, the encoder 340 may sense 45 rotational positions of the thickness-sensing reference roller 321 while the thickness-sensing reference roller 321 rotates one revolution. The encoder 340 may be connected to the controller 1000 and transmit the plurality of rotational positions of the thickness-sensing reference roller 321 sensed while the thickness-sensing reference roller 321 rotates one revolution to the controller 1000. The encoder 340 may include a rotary plate 341 and an encoder counter 342.

The rotary plate 341 may be connected to the rotation shaft of the thickness-sensing reference roller 321 and rotated together with the thickness-sensing reference roller 321. A plurality of slits 341-1 and a plurality of blocking portions 341-2 may be formed in the rotary plate 341. The plurality of slits 341-1 may be formed at regular intervals in a circumferential direction of the rotary plate 341 at an edge of the rotary plate 341. For example, 45 slits 341-1 may be formed at regular intervals in the circumferential direction of the rotary plate 341 at the edge of the rotary plate 341. Furthermore, the plurality of blocking portions 341-2 may be formed between the plurality of slits 341-1.

The encoder counter 342 includes a light-emitting unit for counter (not shown) and a light-receiving unit for counter (not shown), and the light-emitting unit for counter and the light-receiving unit for counter may be respectively positioned on both sides of the rotary plate 341 where the slits 341-1 are formed so as to face each other. For example, the light-emitting unit for counter may be positioned to be spaced apart from one side of the rotary plate 341 by a predetermined distance, and the light-receiving unit for counter may be positioned to be spaced apart from the other side of the rotary plate 341 by a predetermined distance so as to face the light-receiving unit for counter. Furthermore, the encoder counter 342 may be operable to output a light or dark signal depending on whether light irradiated from the light-emitting unit for counter reaches the light-receiving unit for counter. One cycle in which a light signal is output from the encoder counter 342, followed by a dark signal output, and then a light signal is output again, may be referred to as an encoder pulse. Furthermore, one encoder pulse may indicate one of the plurality of rotational positions of the thickness-sensing reference roller 321. For example, when 45 slits 341-1 are formed at regular intervals in the circumferential direction of the rotary plate 341 at the edge of the rotary plate 341, 45 encoder pulses may occur, and the 45 encoder pulses may indicate 45 rotational positions of the thickness-sensing reference roller 321.

Referring back to FIG. 1, the deposited medium discrimination unit 400 may discriminate the media 2 separated sheet by sheet and conveyed from the customer reception unit 200. When the medium thickness sensing unit 300 is disposed between the customer reception unit 200 and the deposited medium discrimination unit 400, the deposited medium discrimination unit 400 may discriminate the media 2 whose thickness is sensed by the medium thickness sensing unit 300 while being separated sheet by sheet and conveyed from the customer reception unit 200. The deposited medium discrimination unit 400 may discriminate presence of anomalies and denominations of the media 2 and count the media 2. The deposited medium discrimination unit 400 may discriminate whether a medium is a normal note or an abnormal note, and may discriminate whether the normal note is a non-recyclable note or a recyclable note.

Here, the abnormal note is a medium failing to be processed for deposit. For example, the abnormal note may include an old medium whose image may not be read, a folded medium, a counterfeit note, a suspect note, and the like. Among the abnormal notes, a medium stored in the automated teller machine 1 and not returned to the user may be named a reject note. The normal note is a medium not determined as an abnormal note, and may include a non-recyclable note and a recyclable note. The non-recyclable note refers to a medium used primarily for deposit and not for dispensing due to a relatively low frequency of use and circulation of the medium by users. The recyclable note refers to a medium used for both deposit and dispensing due to a relatively high frequency of use and circulation of the medium by users. In other words, the recyclable note refers to a medium deposited by a user and capable of being dispensed to the user. The non-recyclable note and the recyclable note may be classified based on an amount according to the denomination of the medium. The recyclable note may be set as a relatively low-denomination note compared to the non-recyclable note, and the non-recyclable note may be set as a relatively high-denomination note compared to the recyclable note. Meanwhile, the non-recyclable note may be designated by a user.

In the temporary holding unit 500, the normal notes among the media 2 discriminated by the deposited medium discrimination unit 400 may be temporarily held. In other words, in the temporary holding unit 500, the non-recyclable note and the recyclable note discriminated as the normal notes in the deposited medium discrimination unit 400 may be temporarily held. The normal notes temporarily held in the temporary holding unit 500 may be conveyed to the storage unit 700 and stored in the storage unit 700, or conveyed to the customer reception unit 200 and returned to the customer. When a customer selects deposit acceptance, the normal notes temporarily held in the temporary holding unit 500 may be stored in the storage unit 700. When the customer selects deposit cancellation, the normal notes temporarily held in the temporary holding unit 500 may be conveyed to the customer reception unit 200 and returned to the customer.

In the reject unit 600, the abnormal notes among the media 2 discriminated by the deposited medium discrimination unit 400 may be temporarily held. In other words, in the reject unit 600, a deposit abnormal note discriminated as the abnormal note by the deposited medium discrimination unit 400 may be temporarily stored.

In the storage unit 700, the normal notes temporarily held in the temporary holding unit 500 may be stored. Furthermore, in the storage unit 700, the media 2 discriminated as a dispensed abnormal note, to be described later, may be stored upon dispensing the stored media 2. The storage unit 700 may include a deposit-dedicated storage unit 710 and a recycling storage unit 720. In the deposit-dedicated storage unit 710, the non-recyclable notes among the normal notes discriminated by the deposited medium discrimination unit 400 and temporarily held in the temporary holding unit 500 may be conveyed and stored. Furthermore, in the deposit-dedicated storage unit 710, the dispensed abnormal note discriminated by the dispensed medium discrimination unit 800 and temporarily held in the temporary holding unit 500 may be stored. Furthermore, in the recycling storage unit 720, the recyclable notes among the normal notes discriminated by the deposited medium discrimination unit 400 and temporarily held in the temporary holding unit 500 may be stored. The recycling storage unit 720 may be provided in plurality, thereby separating and storing the recyclable notes by denomination.

The dispensed medium discrimination unit 800 may discriminate the media 2 conveyed sheet by sheet from the recycling storage unit 720 to be dispensed. The dispensed medium discrimination unit 800 may discriminate the presence of anomalies and the denominations of the media 2 and count the media 2. Furthermore, the dispensed medium discrimination unit 800 may discriminate whether the medium is a normal note or an abnormal note. The normal notes among the media 2 discriminated by the dispensed medium discrimination unit 800 may be conveyed to the customer reception unit 200 and dispensed. The dispensed abnormal note, which is the abnormal note among the media 2 discriminated by the dispensed medium discrimination unit 800, may be temporarily stored in the temporary holding unit 500, and then conveyed to and stored in the deposit-dedicated storage unit 710 when dispensing of the normal notes is completed.

The conveyance path 900 may convey the media among the customer reception unit 200, the medium thickness sensing unit 300, the deposited medium discrimination unit 400, the temporary holding unit 500, the reject unit 600, the storage unit 700, and the dispensed medium discrimination unit 800. The conveyance path 900 may include an upper conveyance path 910, a lower conveyance path 920, and a gate 930.

The upper conveyance path 910 is connected to each of the customer reception unit 200, the medium thickness sensing unit 300, the deposited medium discrimination unit 400, the temporary holding unit 500, and the reject unit 600, and may convey the media 2 among the customer reception unit 200, the medium thickness sensing unit 300, the deposited medium discrimination unit 400, the temporary holding unit 500, and the reject unit 600. Furthermore, the upper conveyance path 910 is connected to the lower conveyance path 920, and may convey the normal notes or the dispensed abnormal note temporarily held in the temporary holding unit 500 to the storage unit 700, and convey the dispensed abnormal note discriminated by the dispensed medium discrimination unit 800 to the temporary holding unit 500.

The lower conveyance path 920 is connected to the storage unit 700 and the dispensed medium discrimination unit 800, and may convey the normal notes stored in the storage unit 700 to be discriminated by the dispensed medium discrimination unit 800. Furthermore, the lower conveyance path 920 is connected to the upper conveyance path 910, and may convey the normal notes discriminated by the dispensed medium discrimination unit 800 to the customer reception unit 200. Furthermore, the lower conveyance path 920 conveys the normal notes or the dispensed abnormal note to store the normal notes or the dispensed abnormal note temporarily held in the temporary holding unit 500 in the storage unit 700, and conveys the dispensed abnormal note to temporarily hold the dispensed abnormal note discriminated by the dispensed medium discrimination unit 800 in the temporary holding unit 500.

The gate 930 may be disposed at a branch portion of the upper conveyance path 910 or a branch portion of the lower conveyance path 920 to switch a direction of the branch portion of the upper conveyance path 910 or the branch portion of the lower conveyance path 920, whereby the media may be correctly conveyed.

The controller 1000 may control at least one of the customer reception unit 200, the medium thickness sensing unit 300, the deposited medium discrimination unit 400, the temporary holding unit 500, the reject unit 600, the storage unit 700, the dispensed medium discrimination unit 800, and the conveyance path 900. The controller 1000 may be implemented by a computing device including a microprocessor, and since an implementation method of the controller 1000 is obvious to those skilled in the art, a further detailed description will be omitted.

The controller 1000 may calculate the thickness of the media 2 based on the up and down displacement of the thickness-sensing auxiliary roller 322 with respect to the thickness-sensing reference roller 321 sensed by the roller displacement sensing unit 330. The controller 1000 may be connected to the roller displacement sensing unit 330 to receive the up and down displacement of the thickness-sensing auxiliary roller 322 sensed by the roller displacement sensing unit 330, and calculate the thickness of the media 2 based on the up and down displacement of the thickness-sensing auxiliary roller 322.

The controller 1000 may calculate the thickness of the media 2 by subtracting the medium non-passing phase, which is the up and down displacement of the thickness-sensing auxiliary roller 322 in the medium non-passing state of the thickness-sensing roller unit 320, from the medium passing phase, which is the up and down displacement of the thickness-sensing auxiliary roller 322 in the medium passing state of the thickness-sensing roller unit 320. The medium non-passing phase may indicate the concentricity of the thickness-sensing reference roller 321. In other words, the medium non-passing phase may indicate the degree of eccentricity of the thickness-sensing reference roller 321. Furthermore, the medium passing phase may indicate a sum of the concentricity of the thickness-sensing reference roller 321 and the thickness of the media 2. In other words, the medium passing phase may indicate, for example, a sum of the degree of eccentricity of the thickness-sensing reference roller 321 and the thickness of the media 2. Therefore, by subtracting the medium non-passing phase from the medium passing phase, an influence of the concentricity of the thickness-sensing reference roller 321 may be eliminated from the medium passing phase. In other words, when sensing the thickness of the media 2 such as the banknotes, the sensed thickness of the media 2 may be corrected in consideration of the concentricity of the thickness-sensing reference roller 321. Furthermore, even if the concentricity of the thickness-sensing reference roller 321 is not good, the thickness of the media 2 may be sensed relatively precisely. Furthermore, even if the concentricity of the thickness-sensing reference roller 321 is not good, the media 2 attached by the tape 2-1 or the like may be sensed.

The controller 1000 may receive the plurality of rotational positions of the thickness-sensing reference roller 321 from the encoder 340 while the thickness-sensing reference roller 321 rotates one revolution, and receive the medium non-passing phase at the plurality of rotational positions of the thickness-sensing reference roller 321 from the roller displacement sensing unit 330. Furthermore, the medium non-passing phase at the plurality of rotational positions of the thickness-sensing reference roller 321 may be stored in the controller 1000 while the thickness-sensing reference roller 321 rotates one revolution. Furthermore, the controller 1000 may receive the plurality of rotational positions of the thickness-sensing reference roller 321 from the encoder 340, and receive the medium passing phase at the plurality of rotational positions of the thickness-sensing reference roller 321 from the roller displacement sensing unit 330. Furthermore, the medium non-passing phase at the plurality of rotational positions of the thickness-sensing reference roller 321 may be stored in the controller 1000.

The controller 1000 may determine one or more reference rotational positions from among the plurality of rotational positions of the thickness-sensing reference roller 321 based on a point in time when the media 2 are detected by the medium detection sensor 310. Furthermore, the controller 1000 may calculate the thickness of the media 2 by subtracting the medium non-passing phase at the one or more reference rotational positions from the medium passing phase at the one or more reference rotational positions.

As described above, the thickness-sensing separation distance LT, which is a distance between the medium detection sensor 310 and the thickness-sensing roller unit 320, may be greater than the circumference length of the thickness-sensing reference roller 321. Furthermore, the media 2 may reach the thickness-sensing roller unit 320 after the medium detection sensor 310 senses the passage of the media 2 in a medium sensing step S100 and the media 2 are conveyed by a distance longer than the circumference length of the thickness-sensing reference roller 321. Furthermore, the roller displacement sensing unit 330 may start sensing the medium passing phase after the medium detection sensor 310 senses the passage of the media 2 in the medium sensing step S100 and the thickness-sensing reference roller 321 further rotates a predetermined angle after rotating one revolution.

For this reason, the rotational position of the thickness-sensing reference roller 321 at a point in time when the media 2 are detected by the medium detection sensor 310 may differ from the rotational position of the thickness-sensing reference roller 321 when the roller displacement sensing unit 330 starts sensing the medium passing phase. Therefore, in order for the controller 1000 to calculate the thickness of the media 2 by subtracting the medium passing phase from the medium non-passing phase, the rotational position of the thickness-sensing reference roller 321 at which the medium passing phase is sensed needs to be synchronized with the rotational position of the thickness-sensing reference roller 321 at which the medium non-passing phase is sensed. To this end, the controller 1000 may determine one or more reference rotational positions from among the plurality of rotational positions of the thickness-sensing reference roller 321 based on the point in time when the media 2 are detected by the medium detection sensor 310.

For example, there may be 45 rotational positions of the thickness-sensing reference roller 321 sensed by the encoder 340. Furthermore, the controller 1000 may set the rotational position of the thickness-sensing reference roller 321 at the point in time when the media 2 are detected by the medium detection sensor 310 as a 1st rotational position, and sequentially set the 45 rotational positions of the thickness-sensing reference roller 321 up to a 45th rotational position. Furthermore, the sensing of the medium non-passing phase in the roller displacement sensing unit 330 may be performed from the 1st rotational position to the 45th rotational position of the thickness-sensing reference roller 321 while the media 2 are detected by the medium detection sensor 310 and the thickness-sensing reference roller 321 rotates one revolution. Furthermore, the sensing of the medium passing phase in the roller displacement sensing unit 330 may start at an 11th rotational position after the thickness-sensing reference roller 321 is rotated from the 1st rotational position to the 11th rotational position after sensing the medium non-passing phase. In other words, the thickness-sensing separation distance LT may be a length, which is a sum of the circumference length of the thickness-sensing reference roller 321 and an arc length of the thickness-sensing reference roller 321 with respect to a rotation angle between the 1st rotational position and the 11th rotational position of the thickness-sensing reference roller 321.

Furthermore, when the rotational position of the thickness-sensing reference roller 321 at which the medium passing phase is sensed ranges from the 11th rotational position to a 39th rotational position of the thickness-sensing reference roller 321, the controller 1000 may determine at least a portion of the 11th rotational position to the 39th rotational position of the thickness-sensing reference roller 321 as the reference rotational position. Furthermore, the controller 1000 may calculate the thickness of the media 2 by subtracting the medium non-passing phase from the medium passing phase at at least a portion of the rotational positions among the 11th rotational position to the 39th rotational position of the thickness-sensing reference roller 321 determined as the reference rotational position. For example, the 11th rotational position to the 39th rotational position of the thickness-sensing reference roller 321 may be determined as the reference rotational position. Furthermore, the controller 1000 may start calculating the thickness of the media 2 by subtracting the medium non-passing phase from the medium passing phase at the 11th rotational position of the thickness-sensing reference roller 321. Furthermore, the controller 1000 may calculate the thickness of the media 2 by subtracting the medium non-passing phase from the medium passing phase sequentially from the 11th rotational position to the 39th rotational position of the thickness-sensing reference roller 321.

Meanwhile, in the automated teller machine 1, the concentricity of the thickness-sensing reference roller 321 may be measured prior to a transaction at every financial transaction. In other words, in the automated teller machine 1, the concentricity of the thickness-sensing reference roller 321 may be measured prior to deposit or dispensing of the media 2 at every deposit or dispensing of the media 2.

In the automated teller machine 1, prior to the transaction at every financial transaction, the concentricity of the thickness-sensing reference roller 321 may be measured by rotating the thickness-sensing reference roller 321, sensing the plurality of rotational positions of the thickness-sensing reference roller 321 by the encoder 340, and sensing the medium non-passing phase at the plurality of rotational positions by the roller displacement sensing unit 330.

The controller 1000 may rotate the thickness-sensing reference roller 321 by driving the roller driving unit prior to the transaction at every financial transaction. Furthermore, the concentricity of the thickness-sensing reference roller 321 may be measured by sensing the plurality of rotational positions of the thickness-sensing reference roller 321 by the encoder 340 and sensing the medium non-passing phase at the plurality of rotational positions of the thickness-sensing reference roller 321 by the roller displacement sensing unit 330. The medium non-passing phase at the plurality of rotational positions of the thickness-sensing reference roller 321 sensed by the roller displacement sensing unit 330 may be transmitted to the controller 1000, and the concentricity of the thickness-sensing reference roller 321 may be calculated and stored in the controller 1000.

For example, the encoder 340 may sense 45 rotational positions of the thickness-sensing reference roller 321 while the thickness-sensing reference roller 321 rotates one revolution. Furthermore, the encoder 340 may sense 250 rotational positions of the thickness-sensing reference roller 321, and the roller displacement sensing unit 330 may sense the medium non-passing phase at the 250 rotational positions of the thickness-sensing reference roller 321. Furthermore, the concentricity of the thickness-sensing reference roller 321 may be repeated every 45 rotational positions of the thickness-sensing reference roller 321. Therefore, the medium non-passing phase sensed at the 250 rotational positions of the thickness-sensing reference roller 321 may include five identical concentricities of the thickness-sensing reference roller 321 and the medium non-passing phase at 25 rotational positions of the thickness-sensing reference roller 321. Therefore, when the thickness-sensing reference roller 321 rotates 25 more rotational positions, a current rotational position may become the 1st rotational position of the thickness-sensing reference roller 321 where the medium non-passing phase is sensed.

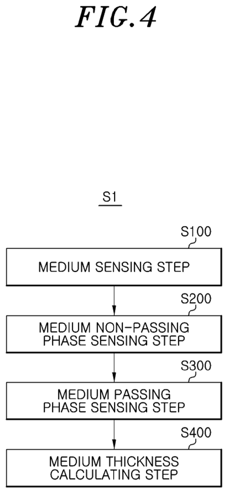

Hereinafter, a method for controlling the automated teller machine according to the embodiment of the present disclosure will be described with reference to FIGS. 4 to 10. A method S1 for controlling the automated teller machine may sense the thickness of the media 2 such as banknotes conveyed in the automated teller machine 1. For example, when media inserted into the customer reception unit 200 of the automated teller machine 1 are separated sheet by sheet and conveyed to the deposited medium discrimination unit 400 through the upper conveyance path 910 of the conveyance path 900, the thickness of the media 2 may be sensed. Referring to FIG. 4, the method for controlling the automated teller machine may include the medium sensing step S100, a medium non-passing phase sensing step S200, a medium passing phase sensing step S300, and a medium thickness calculating step S400.

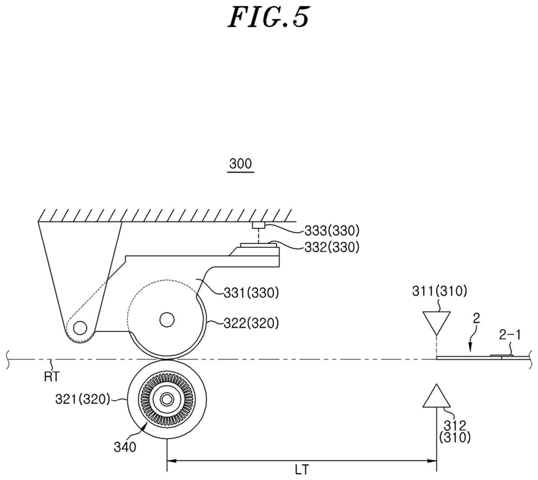

Referring to FIG. 5, in the medium sensing step S100, the medium detection sensor 310 may sense the passage of the media 2. For example, in the medium sensing step S100, the medium detection sensor 310 disposed on the upper conveyance path 910 between the customer reception unit 200 and the deposited medium discrimination unit 400 may sense the passage of the media 2. The medium detection sensor 310 may be spaced apart from the thickness-sensing roller unit 320 including the thickness-sensing reference roller 321 and the thickness-sensing auxiliary roller 322 by the thickness-sensing separation distance LT in the direction opposite to the convey direction of the media 2. Furthermore, the thickness-sensing separation distance LT may be greater than the circumference length of the thickness-sensing reference roller 321. Therefore, in the medium sensing step S100, the media 2 may reach the thickness-sensing roller unit 320 after the medium detection sensor 310 senses the passage of the media 2 and the media 2 are conveyed by a distance longer than the circumference length of the thickness-sensing reference roller 321.

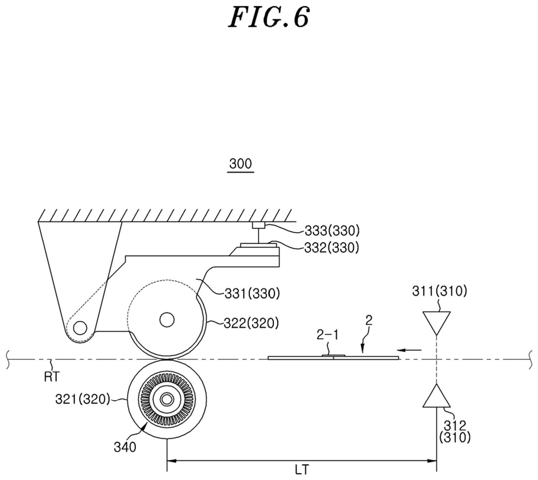

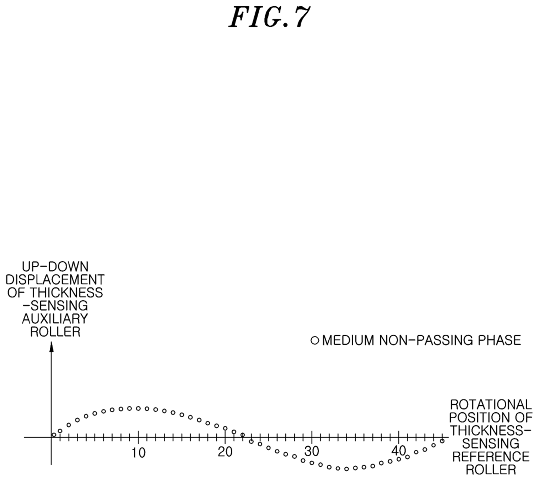

Referring to FIGS. 6 and 7, in the medium non-passing phase sensing step S200, the medium non-passing phase, which is the up and down displacement of the thickness-sensing auxiliary roller 322 with respect to the thickness-sensing reference roller 321, may be sensed in the medium non-passing state of the thickness-sensing roller unit 320 in which the media 2 do not pass between the thickness-sensing reference roller 321 and the thickness-sensing auxiliary roller 322. For example, the roller displacement sensing unit 330 may sense the medium non-passing phase in the medium non-passing state of the thickness-sensing roller unit 320. The thickness-sensing reference roller 321 may be fixed to the body 100, and the thickness-sensing auxiliary roller 322 may be disposed above the thickness-sensing reference roller 321 so as to be movable at least in the up and down direction. Furthermore, the thickness-sensing auxiliary roller 322 and the thickness-sensing reference roller 321 may be in contact with each other in the medium non-passing state of the thickness-sensing roller unit 320. The medium non-passing phase may indicate the concentricity of the thickness-sensing reference roller 321. In other words, the medium non-passing phase may indicate the degree of eccentricity of the thickness-sensing reference roller 321.

The medium non-passing phase sensing step S200 may be performed while the passage of the media 2 is sensed in the medium sensing step S100 and the media 2 are conveyed to the thickness-sensing roller unit 320 including the thickness-sensing reference roller 321 and the thickness-sensing auxiliary roller 322. While the passage of the media 2 is sensed in the medium sensing step S100 and the media 2 are conveyed to the thickness-sensing roller unit 320, the media 2 may not pass between the thickness-sensing reference roller 321 and the thickness-sensing auxiliary roller 322. In other words, while the passage of the media 2 is sensed in the medium sensing step S100 and the media 2 are conveyed to the thickness-sensing roller unit 320, the thickness-sensing roller unit 320 may be in the medium non-passing state. Furthermore, the roller displacement sensing unit 330 may sense the medium non-passing phase in the medium non-passing state of the thickness-sensing roller unit 320.

In the medium non-passing phase sensing step S200, the encoder 340 disposed on the thickness-sensing reference roller 321 may sense the plurality of rotational positions of the thickness-sensing reference roller 321 while the thickness-sensing reference roller 321 rotates one revolution. For example, in the medium non-passing phase sensing step S200, the encoder 340 may sense 45 rotational positions of the thickness-sensing reference roller 321 while the thickness-sensing reference roller 321 rotates one revolution.

Furthermore, in the medium non-passing phase sensing step S200, the medium non-passing phase at the plurality of rotational positions of the thickness-sensing reference roller 321 may be sensed. As described above, the thickness-sensing separation distance LT, which is the distance between the medium detection sensor 310 and the thickness-sensing roller unit 320, may be greater than the circumference length of the thickness-sensing reference roller 321. Furthermore, while the medium detection sensor 310 senses the passage of the media 2 in the medium sensing step S100 and the media 2 are conveyed to the thickness-sensing roller unit 320, the thickness-sensing reference roller 321 may rotate one revolution. Furthermore, the encoder 340 may sense the plurality of rotational positions of the thickness-sensing reference roller 321, and the roller displacement sensing unit 330 may sense the medium non-passing phase at the plurality of rotational positions of the thickness-sensing reference roller 321. For example, the roller displacement sensing unit 330 may sense the medium non-passing phase at the 45 rotational positions of the thickness-sensing reference roller 321.

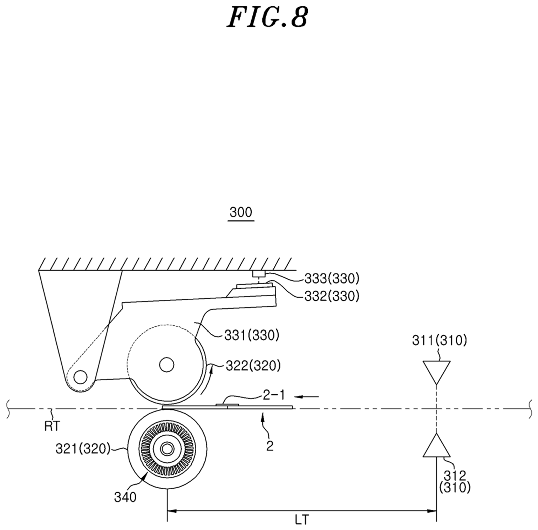

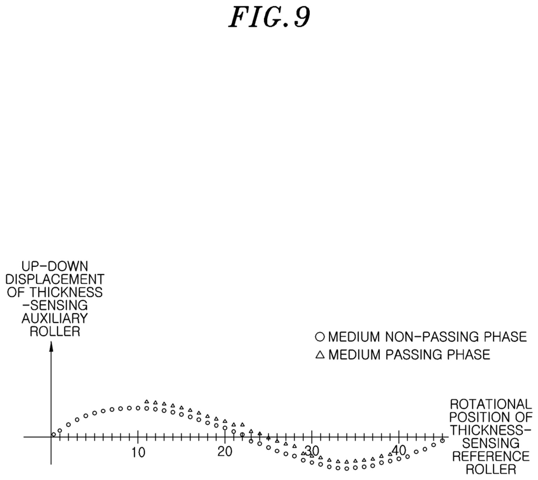

Referring to FIGS. 8 and 9, in the medium passing phase sensing step S300, the medium passing phase, which is the up and down displacement of the thickness-sensing auxiliary roller 322 with respect to the thickness-sensing reference roller 321, may be sensed in the medium passing state of the thickness-sensing roller unit 320 in which the media 2 pass between the thickness-sensing reference roller 321 and the thickness-sensing auxiliary roller 322. For example, the roller displacement sensing unit 330 may sense the medium passing phase in the medium passing state of the thickness-sensing roller unit 320. The medium passing phase may indicate a sum of the concentricity of the thickness-sensing reference roller 321 and the thickness of the media 2. In other words, the medium passing phase may indicate, for example, a sum of the degree of eccentricity of the thickness-sensing reference roller 321 and the thickness of the media 2.

In the medium passing phase sensing step S300, one or more reference rotational positions may be determined from among the plurality of rotational positions of the thickness-sensing reference roller 321 based on the point in time when the media 2 are detected.

As described above, the thickness-sensing separation distance LT, which is the distance between the medium detection sensor 310 and the thickness-sensing roller unit 320, may be greater than the circumference length of the thickness-sensing reference roller 321. Furthermore, the medium non-passing phase may be sensed at the plurality of rotational positions of the thickness-sensing reference roller 321 while the thickness-sensing reference roller 321 rotates one revolution in the medium non-passing phase sensing step S200, and the medium passing phase may not be sensed immediately in the medium passing phase sensing step S300. In other words, the medium passing phase sensing step S300 may start after the medium non-passing phase sensing step S200 is completed and the thickness-sensing reference roller 321 further rotates by a predetermined angle until the media 2 reach the thickness-sensing roller unit 320 and are conveyed.

For example, there may be 45 rotational positions of the thickness-sensing reference roller 321 sensed by the encoder 340. Furthermore, the rotational position of the thickness-sensing reference roller 321 at the point in time when the media 2 are detected by the medium detection sensor 310 may be set as the 1st rotational position, and the 45 rotational positions of the thickness-sensing reference roller 321 may be sequentially set up to the 45th rotational position. Furthermore, the sensing of the medium passing phase in the roller displacement sensing unit 330 may not start at the 1st rotational position of the thickness-sensing reference roller 321, but may start after the thickness-sensing reference roller 321 is further rotated up to the 11th rotational position. In other words, the thickness-sensing separation distance LT may be a length, which is a sum of the circumference length of the thickness-sensing reference roller 321 and an arc length of the thickness-sensing reference roller 321 with respect to the rotation angle between the 1st rotational position and the 11th rotational position of the thickness-sensing reference roller 321.

Furthermore, when the rotational position of the thickness-sensing reference roller 321 at which the medium passing phase is sensed ranges from the 11th rotational position to the 39th rotational position of the thickness-sensing reference roller 321, at least a portion of the 11th rotational position to the 39th rotational position of the thickness-sensing reference roller 321 may be determined as the reference rotational position.

Meanwhile, the determination of the reference rotational position may be performed in the above-described medium non-passing phase sensing step S200. For example, in the medium non-passing phase sensing step S200, a previously determined reference rotational position may be determined as the reference rotational position. Furthermore, in the medium non-passing phase sensing step S200, the reference rotational position may be determined in consideration of a length of the media 2 in the convey direction, the thickness-sensing separation distance LT, and the like.

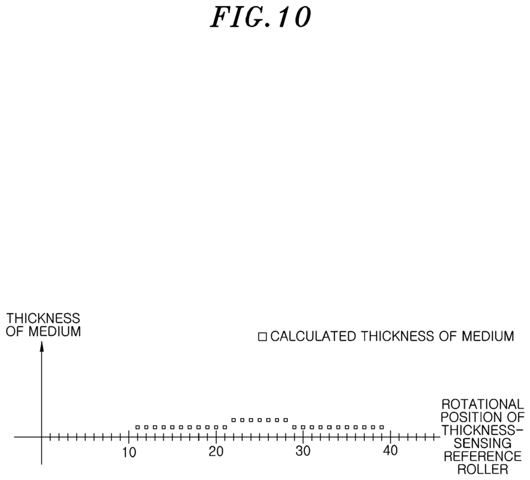

Referring to FIG. 10, in the medium thickness calculating step S400, the thickness of the media 2 may be calculated by subtracting the medium non-passing phase from the medium passing phase. The medium non-passing phase may indicate the concentricity of the thickness-sensing reference roller 321. In other words, the medium non-passing phase may indicate the degree of eccentricity of the thickness-sensing reference roller 321. Furthermore, the medium passing phase may indicate a sum of the concentricity of the thickness-sensing reference roller 321 and the thickness of the media 2. In other words, the medium passing phase may indicate, for example, a sum of the degree of eccentricity of the thickness-sensing reference roller 321 and the thickness of the media 2. Therefore, by subtracting the medium non-passing phase from the medium passing phase, the influence of the concentricity of the thickness-sensing reference roller 321 on the medium passing phase may be eliminated. In other words, when sensing the thickness of the media 2 such as the banknotes, the sensed thickness of the media 2 may be corrected in consideration of the concentricity of the thickness-sensing reference roller 321. Furthermore, even if the concentricity of the thickness-sensing reference roller 321 is not good, the thickness of the media 2 may be sensed relatively precisely. Furthermore, even if the concentricity of the thickness-sensing reference roller 321 is not good, the media 2 attached by the tape 2-1 or the like may be sensed.

In the medium thickness calculating step S400, the thickness of the media 2 may be calculated by subtracting the medium non-passing phase and the medium passing phase at a certain reference rotational position of the thickness-sensing reference roller 321. To calculate the thickness of the media 2 by subtracting the medium passing phase from the medium non-passing phase, the rotational position of the thickness-sensing reference roller 321 at which the medium passing phase is sensed needs to be synchronized with the rotational position of the thickness-sensing reference roller 321 at which the medium non-passing phase is sensed. For example, in the medium passing phase sensing step S300, the medium passing phase may be sensed from the 11th rotational position of the thickness-sensing reference roller 321 to the 39th rotational position of the thickness-sensing reference roller 321. Furthermore, the 11th rotational position to the 39th rotational position of the thickness-sensing reference roller 321 may be determined as the reference rotational position. Furthermore, calculating the thickness of the media 2 may be started by subtracting the medium non-passing phase from the medium passing phase at the 11th rotational position of the thickness-sensing reference roller 321. Furthermore, the thickness of the media 2 may be calculated by subtracting the medium non-passing phase from the medium passing phase sequentially from the 11th rotational position of the thickness-sensing reference roller 321 to the 39th rotational position of the thickness-sensing reference roller 321.

As described above, according to the automated teller machine and the method for controlling the automated teller machine according to the embodiment of the present disclosure, there is an effect of correcting the sensed thickness of the media 2 when sensing the thickness of the media 2 such as the banknotes in consideration of the concentricity of the thickness-sensing reference roller 321 used to sense the thickness of the media 2. Furthermore, even if the concentricity of the thickness-sensing reference roller 321 is not good, there is an effect of sensing the thickness of the media 2 relatively precisely. Furthermore, even if the concentricity of the thickness-sensing reference roller 321 is not good, there is an effect of sensing the media 2 attached by the tape 2-1 or the like.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. An automated teller machine comprising:
a body;
a thickness-sensing roller unit including a thickness-sensing reference roller fixed to the body and a thickness-sensing auxiliary roller disposed above the thickness-sensing reference roller so as to be movable in an up and down direction;
a medium thickness sensing unit including a roller displacement sensing unit sensing an up and down displacement of the thickness-sensing auxiliary roller with respect to the thickness-sensing reference roller; and
a controller configured to calculate a thickness of a medium based on the up and down displacement sensed by the roller displacement sensing unit,
wherein the thickness-sensing roller unit is placed in a medium non-passing state in which the medium does not pass between the thickness-sensing reference roller and the thickness-sensing auxiliary roller, or in a medium passing state in which the medium passes between the thickness-sensing reference roller and the thickness-sensing auxiliary roller, and in the medium non-passing state, the thickness-sensing auxiliary roller and the thickness-sensing reference roller are arranged to contact each other, and
wherein the controller calculates the thickness of the medium by subtracting a medium non-passing phase, which is the up and down displacement in the medium non-passing state, from a medium passing phase, which is the up and down displacement in the medium passing state.

2. The automated teller machine of claim 1, wherein the medium thickness sensing unit further comprises:
a medium detection sensor spaced apart from the thickness-sensing roller unit by a thickness-sensing separation distance in a direction opposite to a convey direction of the medium and sensing passage of the medium.

3. The automated teller machine of claim 2, further comprising:
an encoder disposed on the thickness-sensing reference roller to sense a rotational position of the thickness-sensing reference roller,
wherein the encoder senses a plurality of rotational positions of the thickness-sensing reference roller while the thickness-sensing reference roller rotates one revolution, and
wherein the roller displacement sensing unit senses the medium non-passing phase at the plurality of rotational positions.

4. The automated teller machine of claim 3, wherein the thickness-sensing separation distance is greater than a circumference length of the thickness-sensing reference roller, and
wherein the roller displacement sensing unit senses the medium non-passing phase while the medium is detected by the medium detection sensor and the medium is conveyed to the thickness-sensing roller unit.

5. The automated teller machine of claim 4, wherein the controller determines one or more reference rotational positions from among the plurality of rotational positions based on a point in time when the medium is detected by the medium detection sensor.

6. The automated teller machine of claim 5, wherein the controller calculates the thickness of the medium by subtracting the medium non-passing phase at the one or more reference rotational positions from the medium passing phase at the one or more reference rotational positions.

7. The automated teller machine of claim 1, wherein the roller displacement sensing unit comprises:
a lever member connected to the thickness-sensing auxiliary roller so as to move together with the thickness-sensing auxiliary roller;
a magnet disposed on one of the lever member and the body; and
a Hall sensor disposed on the other of the lever member and the body so as to correspond to the magnet and sensing a magnetic force of the magnet.

8. The automated teller machine of claim 3, wherein, before each financial transaction, the thickness-sensing reference roller is rotated, the encoder senses the plurality of rotational positions of the thickness-sensing reference roller, the roller displacement sensing unit senses the medium non-passing phase at the plurality of rotational positions and a concentricity of the thickness-sensing reference roller is measured.

9. A method for controlling an automated teller machine, comprising:
sensing a medium non-passing phase, which is an up and down displacement of a thickness-sensing auxiliary roller with respect to a thickness-sensing reference roller, in a medium non-passing state in which a medium does not pass between the thickness-sensing reference roller and the thickness-sensing auxiliary roller;
sensing a medium passing phase, which is the up and down displacement of the thickness-sensing auxiliary roller with respect to the thickness-sensing reference roller, in a medium passing state in which the medium passes between the thickness-sensing reference roller and the thickness-sensing auxiliary roller; and
calculating a thickness of the medium by subtracting the medium non-passing phase from the medium passing phase,
wherein the thickness-sensing reference roller is fixed to a body and the thickness-sensing auxiliary roller is disposed above the thickness-sensing reference roller so as to be movable at least in an up and down direction, and
wherein in the medium non-passing state, the thickness-sensing auxiliary roller and the thickness-sensing reference roller contact each other.

10. The method of claim 9, further comprising:
sensing passage of the medium by a medium detection sensor,
wherein the medium detection sensor is spaced apart from a thickness-sensing roller unit including the thickness-sensing reference roller and the thickness-sensing auxiliary roller by a thickness-sensing separation distance in a direction opposite to a convey direction of the medium.

11. The method of claim 10, wherein the sensing the medium non-passing phase includes:
sensing a plurality of rotational positions of the thickness-sensing reference roller by an encoder disposed on the thickness-sensing reference roller while the thickness-sensing reference roller rotates one revolution, and sensing the medium non-passing phase at the plurality of rotational positions.

12. The method of claim 11, wherein the thickness-sensing separation distance is greater than a circumference length of the thickness-sensing reference roller, and
wherein the sensing the medium non-passing phase is performed while the passage of the medium is sensed in the sensing passage of the medium and the medium is conveyed to the thickness-sensing roller unit.

13. The method of claim 12, wherein the sensing the medium non-passing phase or the sensing the medium passing phase includes determining one or more reference rotational positions from among the plurality of rotational positions based on a point in time when the medium is detected, and
wherein the calculating the thickness of the medium includes calculating the thickness of the medium by subtracting the medium non-passing phase at the one or more reference rotational positions from the medium passing phase at the one or more reference rotational positions.
